# EUROPÄISCHE PATENTSCHRIFT

(11) **EP 1 692 618 B1**
(45) Veröffentlichungstag und Bekanntmachung des Hinweises auf die Patenterteilung: **24.06.2009**
(21) Anmeldenummer: 04804541.3
(22) Anmeldetag: 19.11.2004
(51) Int. Cl.: G06F 13/40

(54) **EINRICHTUNG ZUR STEUERUNG EINES SPEICHERS**
MEMORY CONTROL DEVICE
DISPOSITIF POUR COMMANDER UNE MEMOIRE

(30) Priorität: 02.12.2003 DE 10356127
(43) Veröffentlichungstag der Anmeldung: 23.08.2006
(73) Patentinhaber: ROBERT BOSCH GMBH, 70442 Stuttgart (DE)
(72) Erfinder: LIETZ, Stephan, 31162 Bad Salzdetfurth (DE); EYMANN, Thomas, 31135 Hildesheim (DE); KUNZE, Christoph, 31079 Sibbesse (DE)
(86) Internationale Anmeldenummer: PCT/EP2004/053009
(87) Internationale Veröffentlichungsnummer: WO 2005/055069

(56) Entgegenhaltungen:
- EP-A- 0 545 575
- EP-A- 1 193 914
- US-B1- 6 233 651

## Beschreibung

Die Erfindung betrifft eine Einrichtung zur Steuerung eines Speichers insbesondere für über eine Netzwerkbrücke zu transportierende Daten.

### Stand der Technik

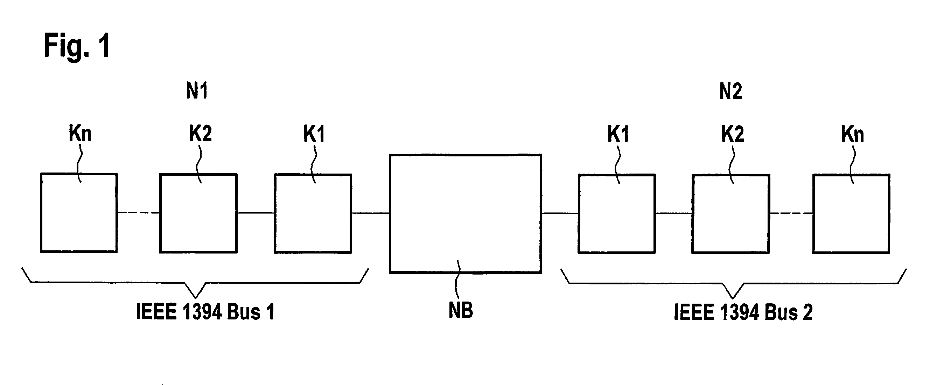

Netzwerke nach IEEE 1394 bestehen gemäß Figur 1 aus einer Anzahl von Knoten K1... Kn im Netzwerk, deren theoretische maximale Anzahl durch die Länge der entsprechenden Knoten-ID (Identification) auf 63 beschränkt ist. Die Knoten-ID zur Adressierung der einzelnen Knoten hat eine Länge von 6 Bit; die Adresse 0xFF ist als Broadcast-Adresse reserviert Möchte man mehr als 63 Knoten verbinden, besteht die Möglichkeit, mehrere separate Busse B1, B2 über eine Netzwerkbrücke NB (Bus-Bridge) zu verbinden. Diese Busse können wiederum einzeln über eine Bus-ID adressiert werden. Die Bus-ID hat eine Länge von 10 Bit, was 1024 Bussen entspricht. Theoretisch können so 1024*63 Knoten, also 64512 Knoten zu einem Netzwerksystem verbunden werden.

Ein serieller Bus nach IEEE 1394 unterstützt die Übertragung asynchroner und isochroner Daten. Während der Empfang asynchroner Datenpakete von den empfangenden Knoten quittiert werden muss, um eine sichere Datenübertragung zu gewährleisten, ist für isochrone Daten keine Quittierung notwendig. Bus-Bridges zur Kopplung mehrerer Busse müssen die Übertragung beider Datentypen unterstützen. Gleichzeitig müssen sie dafür sorgen, dass bei komplexeren Topologien jedes Datenpaket seinen Empfänger erreichen kann und dass alle im Netzwerksystem verbundenen Busse mit einem synchronisierten Takt laufen. Der Draft Standard IEEE 1394.1 spezifiziert die Funktionalität einer solchen High Performance Serial Bus Bridge speziell für den Einsatz in Netzwerken nach IEEE 1394 b.

EP 1 193 914 offenbart eine Netzwerkbrücke mit verschiedenen Pufferspeichern für isochronen und asynchronen Daten.

US 6 233651 offenbart einen Speidrer mit verschiedenen Pufferspeichern, deren Größe anhand ausgewerteten Betriebsparameter dynamisch geändert wird.

### Vorteile der Erfindung

Die Einrichtung mit den Merkmalen:
- der Speicher ist in mehrere Speicherbereiche unterteilt oder besteht aus mehreren Einzelspeichern,
- die Speicherbereiche/Einzelspeicher sind unabhängig voneinander konfigurierbar ausgebildet,
- es sind Mittel vorgesehen, sowohl zur Voreinstellung der einzelnen Speicherbereiche/Einzelspeicher als auch zur dynamischen Änderung während des Betriebes hinsichtlich der Größe und/oder der Anzahl der einzelnen Speicherbereiche/Einzelspeicher.
- Diese Mittel ermöglichen eine statische wie auch eine dynamische Verwaltung des Speichers für über die Netzwerkbrücke zu transportierende Daten.

In Netzwerken mit sich ändernden Betriebsparametern, beispielsweise sich ändernden Datendurchsätzen oder ändernden Paketgrößen ist es dadurch möglich, die vorhandenen begrenzten Ressourcen, wie in diesem Fall den Speicher, optimal zu konfigurieren und zu nutzen. Dadurch kann der Aufwand für den Aufbau einer universellen Netzwerkbrücke auf ein Minimum reduziert werden und gleichzeitig die Performance der Netzwerkbrücke gesteigert werden. Die Erfindung stellt eine flexible und sich dynamisch ändernde Speichergröße für die jeweiligen Kanäle zur Verfügung auf denen unterschiedliche Datenarten insbesondere isochrone and asynchrone Kanäle übertragen werden. Dadurch ist die Netzwerkbrücke in der Lage, für die isochronen und asynchronen Kanäle je nach Bedarf situativ insbesondere die FIFO Speichergröße anzupassen.

Besonders vorteilhaft ist das Einfügen einer zusätzlichen Softwareschicht in die Neztwerkbrücken (Bridge)-Architektur. Diese Bridge-Management und- Konfigurationsschicht kann über geeignete Softwareschnittstellen auf einige oder alle Funktionsblöcke zugreifen und von diesen sowohl Informationen auslesen als auch Parameter für die Funktion dieser Blöcke verändern.

Es ist daher möglich innerhalb oder oberhalb dieser Softwareschicht, z.B. Statistiken über verschiedene Funktionsblöcke zu berechnen. Außerdem kann durch weitere, über der Management- und Konfigurationsschicht liegende Soflwareschichten der Netzwerkbetreiber oder Nutzer direkt oder indirekt die Funktion der Netzwerkbrücke steuern. In Netzwerken mit sich ändernden Betriebsparametern, beispielsweise sich ändernden Datendurchsätzen oder ändernden Paketgrößen ist es dadurch möglich, die vorhandenen begrenzten Ressourcen, wie z.B. Speicher und/oder Leitungskapazität optimal zu konfigurieren und zu nutzen. Dadurch kann der Aufwand für den Aufbau einer solchen Netzwerkbrücke auf ein Minimum reduziert werden und gleichzeitig die Performance der Netzwerkbrücke gesteigert werden.

Aus der EP 0933900 A2 ist eine Netzwerkbrücke für einen IEEE 1394 Bus bekannt. Der dort vorgesehene Bridge-Manager ist jedoch nicht ausgestaltet eine Konfiguration und das Management der Funktionsblöcke zu übernehmen, di ein IEEE 1394.1 beschrieben sind. Eine Management-Ebene für die Konfiguration der einzelnen Funktionsblöcke, insbesondere des Speichers, ist dort nicht offenbart, allenfalls die Funktionsweise nach außen hin. Bei der erfindungsgemäßen Realisierung geht es um die Optimierung der internen Funktionsweise, die dafür sorgen soll, dass eine Netzwerkbrücke nach IEEE 1394.1 sich mit möglichst einfacher Hardware aufbauen lässt. Diese Hardware ist im Nachhinein (vor oder während des Betriebes) durch die Software steuerbar und kann damit so flexibel wie möglich genutzt werden.

### Zeichnungen

Anhand der Zeichnungen werden Ausführungsbeispiele der Erfindung näher erläutert. Es zeigen
Figur 2 ein Architekturmodell für eine Netzwerkbrücke,
Figur 3 das Architekturmodell nach Figur 2 mit Mitteln zur Konfigurierung und Steuerung der Netzwerkbrücke und Schnittstellen zu den Funktionsblöcken der Netzwerkbrücke,
Figur 4 einen dynamischen Speicherblock.

### Beschreibung von Ausführungsbeispielen

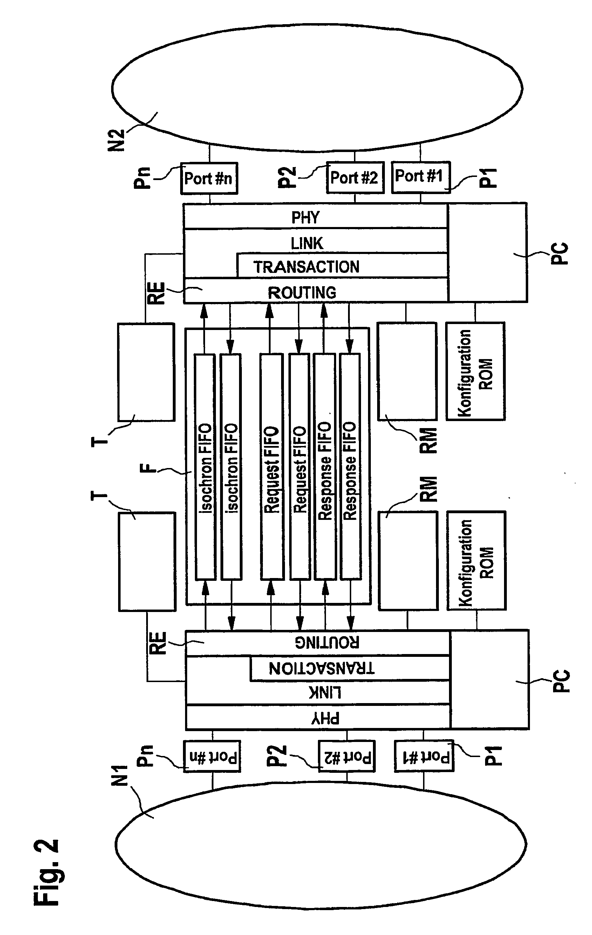

Bevor die eigentliche Erfindung beschrieben wird, wird zum besseren Verständnis zuerst die Funktionsweise eines Architekturmodells für eine Netzwerkbrücke gemäß IEEE 1394 Draft Version 1.04 vorgestellt. Die Netzwerkbrücke gemäß Figur 2 ist über ihre Ports P1, P2... Pn mit jeweils zwei unabhängigen Netzen N1, N2 verbunden und kann Daten empfangen und senden. Im allgemeinen wird sie Daten aus einem Netz empfangen und in das andere Netz senden. Die Funktionsblöcke "Port", "Konfiguration ROM", "PHY", "Link" und "Transaction" entsprechen denen eines normalen Netzwerk-Knotens nach IEEE 1394. Zusätzlich verfügt die Netzwerkbrücke über Routing Maps RM und eine Routingeinheit RE für jedes der beiden Netze. In den Routing Maps RM werden Informationen über die Topologie und Knoten-Adressen in den jeweiligen Netzen breitgehalten und über die Routingeinheit RE können Daten zwischen Link bzw. Transaction Layer und Speicher F der Netzwerkbrücke NB ausgetauscht werden. Nach IEEE1394.1 besteht der Speicher F aus einer Anzahl einzelner FIFOs, die Daten, welche von einem Bus zum anderen transportiert werden sollen, zwischenspeichern. Die Netzwerkbrücke verfügt außerdem über einen internen Timer T ("Cycle Timer") mit denen sie in der Lage ist, die Takte in beiden Bussen zu synchronisieren.

Die Steuerung der Routingeinheiten RE wie auch der Funktionsblöcke "Port", "Konfiguration ROM", "PHY", "Link" und "Transaction" erfolgt über die Funktionseinheiten portal Control" PC.

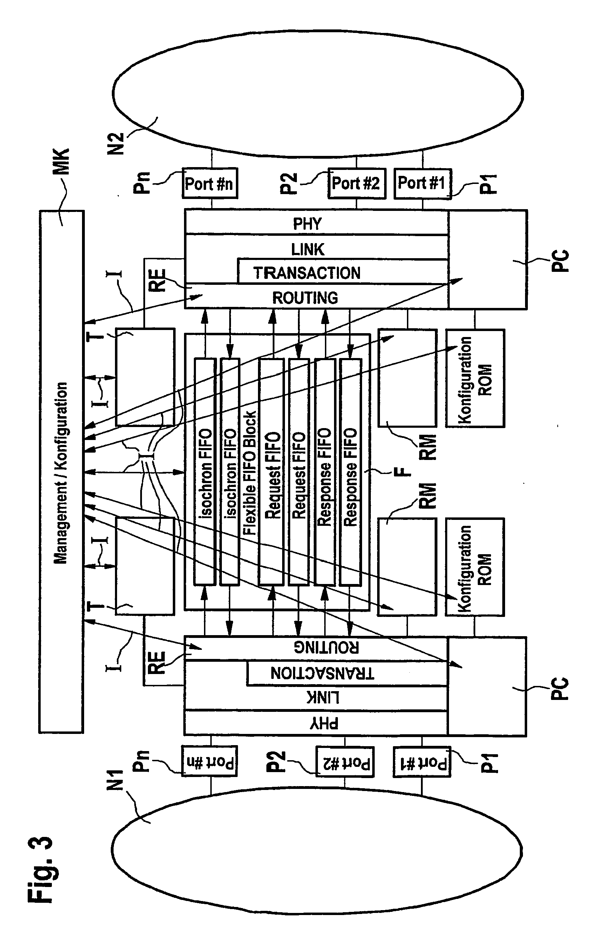

Jeder Funktionsblock in Figur 3 verfügt erfindungsgemäß über eine zusätzliche Schnittstelle I (Interface), über die Daten gelesen und/oder geschrieben werden können. Über diese Schnittstelle I kann die erfindungsgemäße Management- und Konfigurationsschicht MK, die in Hardware und in Software ausgebildet sein kann, statistische Daten, Nutzdaten oder Parameter zum Betrieb der Funktionsblöcke manipulieren. Durch das Sammeln verschiedener Daten ist es der erfindungsgemäßen Softwareschicht möglich, Statistiken zum laufenden Betrieb der Netzwerkbrücke in kurzer Zeit zu erstellen. Diese können wiederum dazu genutzt werden, den Betrieb der Funktionsblöcke zu optimieren, indem z.B. Parameter innerhalb der Funktionsblöcke geändert werden. Als Beispiel soll ein Netzwerk nach IEEE 1394 dienen, in dem zeitweise überwiegend isochrone Daten, z.B. Audio und Videostreams und zeitweise überwiegend asynchrone Daten übertragen werden. Über statistische Auswertungen kann die Management- und Konfigurationsschicht MK oder darüber liegende Softwareschichten erkennen, dass der Anteil der asynchronen Daten am Gesamtdatenaufkommen stark zunimmt. Es ist dann möglich, den flexiblen FIFO Block F so umzukonfigurieren oder ihm entsprechende Vorgaben für ein automatisches Umkonfigurieren zu machen, so dass die Speicherbereiche für isochrone Daten verkleinert und für asynchrone Daten vergrößert werden. Die Netzwerkbrücke kann dadurch schnell auf Änderungen reagieren und muss nicht permanent Speicherbereiche für isochrone und asynchrone Datendurchsätze bereithalten.

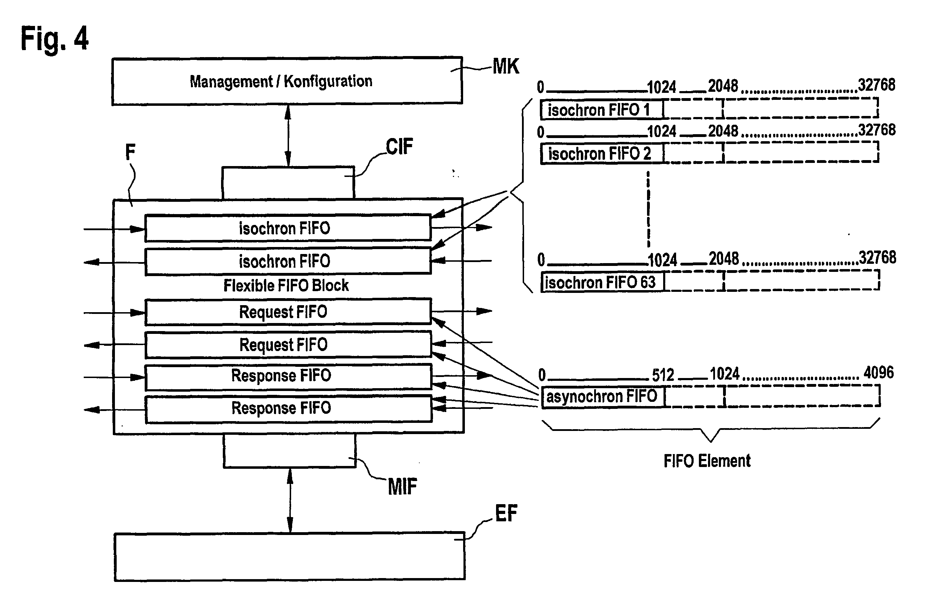

Der dynamische Speicher F nach der Erfindung (flexible FIFO block), wie in Figur 4 dargestellt, besteht aus mehreren sogenannten FIFO Elementen. Die Größe dieser FIFO Elemente ist unabhängig voneinander konfigurierbar. Die Konfiguration dieser Größe und auch aller weiteren Einstellungen für den FIFO Block geschieht über eine Schnittstelle CIF (Control IF) von der Steuerinstanz MK der Netzwerkbrücke aus (Bridge Management Configuration Layer). Die Größe der FIFO Elemente richtet sich nach der Datenrate (S 100, S200, usw.) und damit nach der Paketgröße. Für die isochronen Kanäle kann die Größe eines FIFO Elements 1024 Bytes bei S100 bis 32768 Bytes bei S3200 betragen. Für die asynchronen Kanäle von 512 Bytes bei S 100 bis 4096 Bytes bei S3200. Für die asynchronen Kanäle sind Request FIFO Einheiten für das Weiterleiten der Daten vom einen zum anderen Bus vorgesehen und Response FIFO Einheiten für die Quittierung. Außerdem kann sich in Abhängigkeit der benötigten isochronen Kanäle die Anzahl der dafür benötigten FIFO Elemente ändern. Das bedeutet bei maximal 63 isochronen Kanälen in eine Richtung sind maximal 126 isochrone FIFO Elemente für den Speicher möglich. Sollte die maximal benötigte Gesamtspeichergröße nicht in der Netzwerkbrücke vorhanden sein, gibt es optionale Möglichkeiten über eine Schnittstelle MIF am Speicher (Memory) weiteren externen Speicher EF, z.B. SDRAM, zusätzlich an die Netzwerkbrücke anzubinden, um so die Gesamtgröße des dynamischen Speichers F zu erhöhen.

Zwei mögliche Anwendungsfälle des dynamischen Speichers F gilt es zu unterscheiden:
a) die Einstellungen des dynamischen Speichers F, z.B. Größe und Anzahl der FIFO Elemente, passieren statisch, d.h. sie werden von der Netzwerkbrücke (Bridge Management-Configuration Layer) MK einmal vor dem Betrieb des Busses vorgegeben und bleiben dann während des Betriebes unverändert (Voreinstellung). Wobei mit "vor dem Betrieb" auch der Zeitpunkt nach einem Bus Reset gemeint ist, d.h. nach jeder Änderung der Anzahl der Knoten am Bus können die Einstellungen ebenfalls geändert werden.
b) Die Einstellungen können dynamisch geändert werden, dh., dass es mit dem dynamischen Speicher F möglich ist, den Datenfluss, die Datenrate und somit den benötigten Speicherplatz zu ermitteln. Anhand dieser Informationen kann die Größe und die Anzahl der FIFO Elemente auch während des Busbetriebes an den aktuellen Bedarf angepasst werden.

Für beide Anwendungsfälle ist eine Interaktivität mit der Steuerinstanz der Netzwerkbrücke MK über ein Interface CIF vorgesehen (Control IF). Hierüber können Daten sowohl gelesen und/oder geschrieben werden. Weiter kann die Steuerinstanz MK statistische Daten, Nutzdaten oder Parameter zum Betrieb des dynamischen Speicher F manipulieren. Durch das Sammeln verschiedener Daten, auch von anderen Funktionsblöcken wie z.B. "Portal Control" PC oder "Route Maps" RM (siehe hierzu Figur 3) ist es der Steuerinstanz MK möglich, Statistiken zum laufenden Betrieb der Netzwerkbrücke in kurzer Zeit zu erstellen. Diese können wiederum dazu benutzt werden, den Betrieb der Funktionsblöcke einschließlich des Speichers F zu optimieren, indem z.B. Parameter innerhalb der Funktionsblöcke geändert werden.

Anstelle der zuvor beschriebenen Speicherbereichsunterteilung des Speichers F kann der Speicher F natürlich auch aus Einzelnspeichern bestehen, die je nach Datenaufkommen auf die unterschiedlichen Datenarten entsprechend aufgeteilt werden.

## Patentansprüche

1. Einrichtung zur Steuerung eines Speichers für über eine Netzwerkbrücke zu transportierende Daten mit folgenden Merkmalen:
- der Speicher (F) ist in mehrere Speicherbereiche unterteilt oder besteht aus mehreren Einzelspeichern,
- die Speicherbereiche/Einzelspeicher sind unabhängig voneinander konfigurierbar ausgebildet,
- es sind Mittel (MK) vorgesehen, sowohl zur Voreinstellung der einzelnen Speicherbereiche/Einzelspeicher als auch zur dynamischen Änderung während des Betriebes hinsichtlich der Größe und/oder der Anzahl der einzelnen Speicherbereiche/Einzelspeicher,
- der Speicher (F) ist über eine Schnittstelle (CIF) mit Mitteln (MK) zur Konfigurierung und Steuerung der Netzwerkbrücke verbunden, um Daten abzufragen, auszuwerten und anhand der Auswertung Parameter zur Konfigurierung bezüglich unterschiedlicher Datenarten und zum Betrieb des Speichers (F) bezüglich seiner Speicheraufteilung und Belegung mit unterschiedlichen isochronen und asynchronen Datenarten zu gewinnen.

2. Einrichtung nach Anspruch 1, **dadurch gekennzeichnet, dass** der Speicher (F) über eine weitere Schnittstelle (MIF) mit einem externen Speicher (EF) verbindbar ist, um so die Gesamtgröße des Speichers (F) zu erhöhten.

3. Einrichtung nach Anspruch 1 oder 2, **dadurch gekennzeichnet, dass** die Mittel (MK) zur Konfigurierung und Steuerung der Netzwerkbrücken über weitere Schnittstellen (I) mit weiteren Funktionsblöcken der Netzwerkbrücke verbindbar sind, um Daten zu sammeln, auszuwerten und in Abhängigkeit davon Parameter innerhalb der Funktionsblöcke einschließlich des Speichers (F) zu ändern.

4. Einrichtung nach einem der Ansprüche 1 bis 3, **dadurch gekennzeichnet, dass** die Mittel (MK) zur Konfigurierung und Steuerung der Netzwerkbrücke aus einer Softwareschicht innerhalb der Netzwerkbrücken-Architektur bestehen.

## Claims

1. Device for controlling a memory for data which are to be transported via a network bridge, having the following features:
- the memory (F) is divided into a plurality of memory areas or comprises a plurality of individual memories,
- the memory areas/individual memories are designed to be configurable independently of one another,
- means (MK) are provided, both for presetting the individual memory areas/individual memories and for dynamically changing the size and/or the number of the individual memory areas/individual memories during operation,
- the memory (F) is connected via an interface (CIF) to means (MK) for configuring and controlling the network bridge in order to request data, evaluate said data and use the evaluation to obtain parameters for configuration in respect of different data types and for operating the memory (F) in respect of the memory split thereof and occupancy by different isochronous and asynchronous data types.

2. Device according to Claim 1, **characterized in that** the memory (F) can be connected to an external memory (EF) via a further interface (MIF) so as to increase the total size of the memory (F).

3. Device according to Claim 1 or 2, **characterized in that** the means (MK) for configuring and controlling the network bridges can be connected to further function blocks of the network bridge via further interfaces (I) in order to collect data, evaluate them and take this as a basis for changing parameters within the function blocks, including the memory (F).

4. Device according to one of Claims 1 to 3, **characterized in that** the means (MK) for configuring and controlling the network bridge comprises a software layer within the network bridge architecture.

## Revendications

1. Dispositif pour commander une mémoire pour des données à transporter par le biais d'une passerelle de réseau, avec les caractéristiques suivantes :
- la mémoire (F) est divisée en plusieurs zones de mémoire ou se compose de plusieurs mémoires individuelles,
- les zones de mémoire / mémoires individuelles sont réalisées de manière à pouvoir être configurées indépendamment les unes des autres,
- des moyens (MK) sont prévus à la fois pour le préréglage des zones de mémoire individuelles /mémoires individuelles et pour la modification dynamique pendant le fonctionnement de la taille et/ou du nombre de zones de mémoire individuelles / mémoires individuelles,
- la mémoire (F) est reliée par le biais d'une interface (CIF) avec les moyens (MK) de configuration et de commande de la passerelle de réseau afin d'interroger les données, de les interpréter et, au moyen de l'interprétation, d'acquérir des paramètres pour la configuration en vue de différents types de données et d'utilisation de la mémoire (F) en vue d'une division de la mémoire et de l'affectation avec différents types de données isochrones et asynchrones.

2. Dispositif selon la revendication 1, **caractérisé en ce que** la mémoire (F) peut être reliée par le biais d'une interface supplémentaire (MIF) avec une mémoire externe (EF) afin d'accroître ainsi la taille totale de la mémoire (F).

3. Dispositif selon la revendication 1 ou 2, **caractérisé en ce que** les moyens (MK) de configuration et de commande des passerelles de réseau peuvent être reliés par le biais d'interfaces supplémentaires (I) avec des blocs fonctionnels supplémentaires de la passerelle de réseau afin de collecter des données, de les interpréter et de modifier en fonction de celles-ci des paramètres à l'intérieur des blocs fonctionnels, y compris de la mémoire (F).

4. Dispositif selon l'une des revendications 1 à 3, **caractérisé en ce que** les moyens (MK) de configuration et de commande des passerelles de réseau se composent d'une couche logicielle à l'intérieur de l'architecture des passerelles de réseau.
